Europäisches Patentamt

European Patent Office

Office européen des brevets

(19)

(11) EP 0 740 476 B1

(12) **FASCICULE DE BREVET EUROPEEN**

(45) Date de publication et mention
de la délivrance du brevet:
**25.10.2000 Bulletin 2000/43**

(51) Int Cl.7: **H04N 9/31**, G02F 1/1335,
G02B 27/28

(21) Numéro de dépôt: **96400876.7**

(22) Date de dépôt: **24.04.1996**

(54) **Dispositif de séparation de polarisations et application à un système d'éclairement d'un écran à cristal liquide**

Vorrichtung zur Polarisationstrennung und Anwendung in einem Beleuchtungssystem einer Flüssigkristallanzeigevorrichtung

Polarisation separation device and application to a liquid crystal display illumination system

(84) Etats contractants désignés:
**DE FR GB**

(30) Priorité: **28.04.1995 FR 9505113**

(43) Date de publication de la demande:
**30.10.1996 Bulletin 1996/44**

(73) Titulaire: **THOMSON multimedia**
**92648 Boulogne Cédex (FR)**

(72) Inventeur: **Sarayeddine, Khaled**
**92050 Paris la Defense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 552 725**          **EP-A- 0 609 055**
**EP-A- 0 615 148**

- **PATENT ABSTRACTS OF JAPAN vol. 16, no. 313 (P-1383), 9 Juillet 1992 & JP-A-04 088317 (SHARP)**
- **IBM TECHNICAL DISCLOSURE BULLETIN, vol. 36, no. 09b, Septembre 1993, pages 453-456, XP002009605 "Improved Liquid Crystal Display panel illumination"**
- **PATENT ABSTRACTS OF JAPAN vol. 17, no. 448 (P-1594), 17 Août 1993 & JP-A-05 100331 (TOSHIBA), 23 Avril 1993,**

## Description

L'invention concerne un système d'éclairement d'un écran à cristal liquide et notamment un système permettant d'utiliser efficacement les deux polarisations d'une source d'éclairement non polarisée.

L'émergence de la technologie des écrans à cristaux liquides offre un excellent débouché pour les techniques de projection vidéo. La lumière émise par une lampe à arc est modulée par une cellule à cristaux liquides. L'image formée par le dispositif d'affichage à cristaux liquides est projetée par un système optique sur un écran. La technique dite AM-TFT TNLCD (c'est-à-dire affichage à cristal liquide nématique à torsion commandé par une matrice active de transistors en film mince) est considérée comme essentielle pour les écrans à cristaux liquides, chaque élément image (pixel) étant contrôlée par un transistor. La lumière incidente sur l'écran à cristal liquide doit être polarisée linéairement. L'inconvénient majeur de cette technique est son faible rendement.

En fait, 1 à 2 % de la lumière atteint l'écran. 3 paramètres principaux limitent ce rendement, à savoir:

1 - Plus de 50 % de la lumière est perdue (-60 %) car la lumière provenant de la lampe n'est pas polarisée.

2 - Le facteur de remplissage de la cellule est limité, notamment pour la définition d'une grande image et le petit diamètre du modulateur à cristal liquide. Le facteur de remplissage ou OAR (pour Open Aperture Ratio, c'est-à-dire Rapport d'ouverture) avoisine les 50 %.

3 - Comme la lampe n'est pas petite, l'éclairage du petit diamètre de l'affichage à cristal liquide LCD (le faisceau lumineux étant supporté par l'angle solide adapté au contraste de l'affichage LCD) diminue le rendement lumineux. les écrans d'un format 16:9 présentent un rendement lumineux inférieur à 40 %.

D'autres facteurs génèrent une atténuation, comme le rendu de couleurs, l'équilibrage des blancs et les pertes de Fresnel.

De nombreuses solutions ont été proposées afin d'améliorer le rendement lumineux de ces systèmes de projection. Certaines solutions proposent la conversion de la seconde polarisation (voir par exemple le document "Large Aperture Polarized Light Source and Novel Liquid Crystal Display Operating Modes" S.V. Belayev, M. Schadt, M.I. Barnik, J. Fünufschilling, N.V. Malimoneko and K Schmitt. Japanese Journal of Applied Physics, Vol. 29, April 1990, pp. L634-L637) dans le boîtier d'éclairage, et d'autres préconisent l'utilisation de microlentilles destinées à concentrer la lumière dans la zone active des pixels de l'écran (voir par exemple le document "Brigtness Enhancement of an LCD Projection by Planar Microlens Array" H. Hamada, F. Funada, M. Hijikigawa, K. Awane, SID 92 DIGEST, pp. 269-272).

L'invention concerne un convertisseur par polarisation performant, pouvant être combiné à des microlentilles conventionnelles de manière à obtenir un projecteur à haut rendement, caractérisé par des performances supérieures pouvant atteindre un facteur 3 par rapport à un système conventionnel.

Pour illustrer les diverses améliorations apportées aux systèmes proposés, nous nous sommes basés sur l'étendue géométrique utile ou analyse de l'étendue.

La valeur de l'étendue d'un faisceau lumineux au travers d'une surface S est le produit de ladite surface par l'angle solide supportant le faisceau lumineux :

$$E \ (mm^2.str) = S. \ (surface \ circulaire). \ \Omega$$

où :
$\Omega = 2.\pi[1-\cos(\beta)]$
et $\beta$ étant la demi-ouverture d'éclairage.

La lampe utilisée dans le système d'affichage par projection à cristaux liquides présente une extension spatiale (c'est-à-dire extension spatiale non nulle) ; elle peut être caractérisée par son étendue : $E_{lamp}$ ou Flux (Flux = E (Etendue) * (L(Luminance) si L est constant.

D'autre part le contraste de l'affichage à cristal liquide LCD est largement dépendant de l'ouverture d'éclairage. Si $\beta < \pm 10$ deg, le contraste sera toujours acceptable pour la projection. Ainsi, $\Omega$ est limité à une valeur $\Omega 1$. Ladite limitation est également liée à la lentille de l'objectif utilisée pour la projection.

Par ailleurs, des écrans à cristaux liquides présentant un diamètre assez réduit ont été choisis afin de diminuer le coût desdits systèmes et de leurs composants optiques, d'où une surface d'éclairage S1 réduite.

Si le produit S1 par $\Omega 1$, c'est-à-dire E1, est inférieur à $E_{lamp}$, le rendement lumineux sera médiocre et égal au rapport E1/$E_{lamp}$.

Si E1 est supérieur, $E_{lamp}$, c'est-à-dire le rendement lumineux sera égal à 100 %.

Si E1 est égal à $E_{lamp}$, le système sera optimisé de manière satisfaisante.

Le système de conversion par polarisation double la valeur de l'étendue E car la lumière des deux composantes de polarisation est spatialement scindée dans deux directions.

Après avoir traversé le diviseur de polarisations, la lumière E devient 2E. A ce stade, 2 cas sont envisageables :

$2E = (2S).\Omega$ ce qui n'est pas acceptable en raison de problèmes, d'homogénéité et d'espace.

$2E = S.(2\Omega)$ : les techniques actuelles démontrent que de nombreux systèmes n'atteignent pas cette valeur minimale (soit $2\Omega$), mais davantage.

L'analyse de l'étendue peut être appliquée à la méthode de focalisation de la lumière dans les pixels de l'écran à cristal liquide. Pour la focalisation conventionnelle par une matrice de microlentilles sphériques : une microlentille pour chaque pixel pour une focalisation à 100 % : d'où la nécessité d'obtenir un facteur de remplissage de 100 % et non plus de 50 % (ou moins) ; en effet :

la zone de focalisation est inférieure ou égale à la zone active du pixel c'est-à-dire:

$$2.f.tg\ (\beta_{verre}) \leq surface\ active$$

où:

- surface active du pixel étant égale à la surface du pixel diminuée de la matrice noire (matrice de masquage) : dimension du pixel -matrice noire
- f est l'épaisseur de l'écran à cristaux liquide
- $\beta$ verre, le demi-angle d'éclairage à l'intérieur du verre de l'affichage LCD.

Nous connaissons les paramètres du système : f, $\beta_{verre}$, taille et dimension de l'affichage LCD ; il est ainsi possible de définir la quantité de lumière traversant l'écran après focalisation.

E focalisation = S (surface circulaire à la périphérie de l'affichage LCD) ; $2.\pi[1-cos(n.\beta verre)$

n : indice de réfraction du verre de l'affichage LCD.

Comme préalablement mentionné, le rendement total est le rapport de la focalisation E sur $E_{lamp}$.

Les systèmes d'éclairage conventionnels dotés de dispositifs de conversion par polarisation ou de focalisation ne peuvent être réellement utilisés à cause de l'extension de la valeur d'étendue caractéristique du convertisseur par polarisation par exemple, ce qui annule l'avantage de la focalisation, même si la lampe présente une étendue géométrique restreinte. L'invention résout ce problème et offre un gain supérieur à 3 sur le flux lumineux.

En outre, l'extension de l'angle solide $\Omega$ peut être réalisée de différentes manières : soit dans le sens de l'orifice, soit dans un sens (horizontal ou vertical par rapport à la distribution de l'isocontraste de l'affichage LCD). L'extension dans le bon sens du contraste de l'écran est possible dans ce cas.

L'invention concerne donc un système d'éclairement d'un écran à cristal liquide comprenant une seule source lumineuse émettant un faisceau de lumière non polarisée, un système de séparation et de modification des polarisations recevant ce faisceau de lumière non polarisée et le modifiant de manière à retransmettre vers l'écran à cristal liquide un premier et un deuxième faisceaux, polarisés selon une même direction de polarisation, les axes des deux faisceaux faisant un angle déterminé ; caractérisé en ce qu'il comporte une matrice de microlentilles à raison d'une microlentille pour au moins deux éléments images voisins de l'écran à cristal liquide, chaque microlentille dirige la partie du premier faisceau qu'elle reçoit sur au moins un des éléments images et la partie du deuxième faisceau qu'elle reçoit sur les autres éléments image.

Les différents objets et caractéristiques de l'invention apparaîtront plus clairement dans la description qui va suivre et dans les figures annexées qui représentent sur :

- les figures 1a et 1b, un exemple de réalisation simplifié du système selon l'invention ;
- les figures 2a et 2b, une variante de réalisation du système des figures 1a et 1b ;
- les figures 3a et 3b, des moyens de centrage de la lumière par rapport à la normale au plan de l'écran ;
- la figure 4, un exemple de réalisation du système de l'invention dans lequel une microlentille permet d'éclairer quatre éléments images de l'écran ;
- les figures 5a à 5e, des moyens de réalisation du système de polarisation de la lumière utilisant un filtre cholestérique ;
- la figure 6, un système d'éclairement appliquant des dispositifs de polarisation tel que celui de la figure 5e en multi-éléments miniaturisés ;
- la figure 7, un mode de réalisation du système de la figure 6 ;
- les figures 8a et 8b, un système d'éclairement comportant un dispositif holographique de séparation de polarisations ;
- les figures 9a à 9c, des agencements d'éléments images de l'écran ;
- la figure 10, une organisation générale du système de l'invention ;
- les figures 11 et 12, des exemples de dispositions et de formes de lentilles d'éclairement de l'écran à cristal liquide.

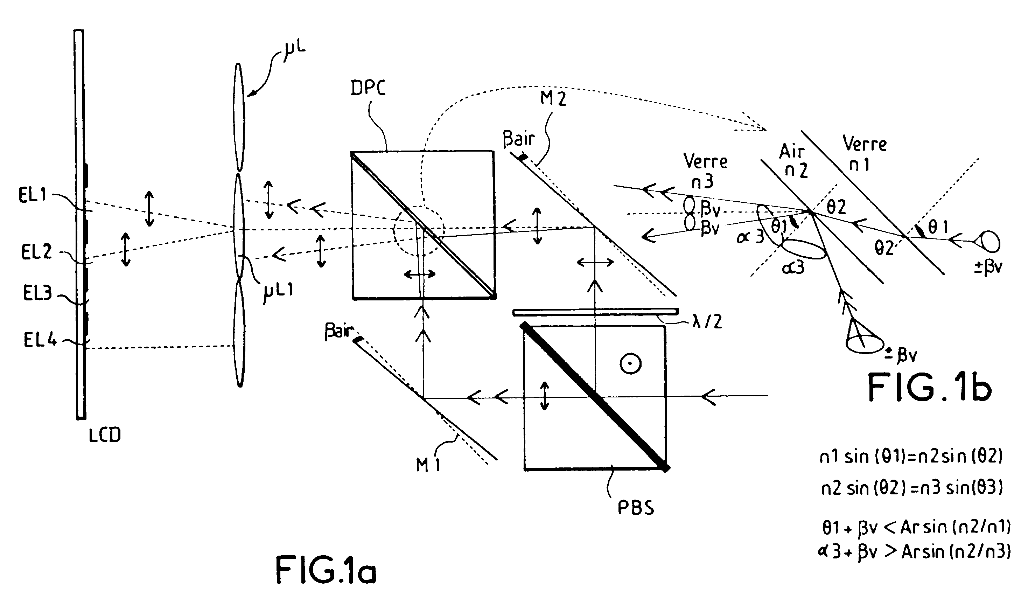

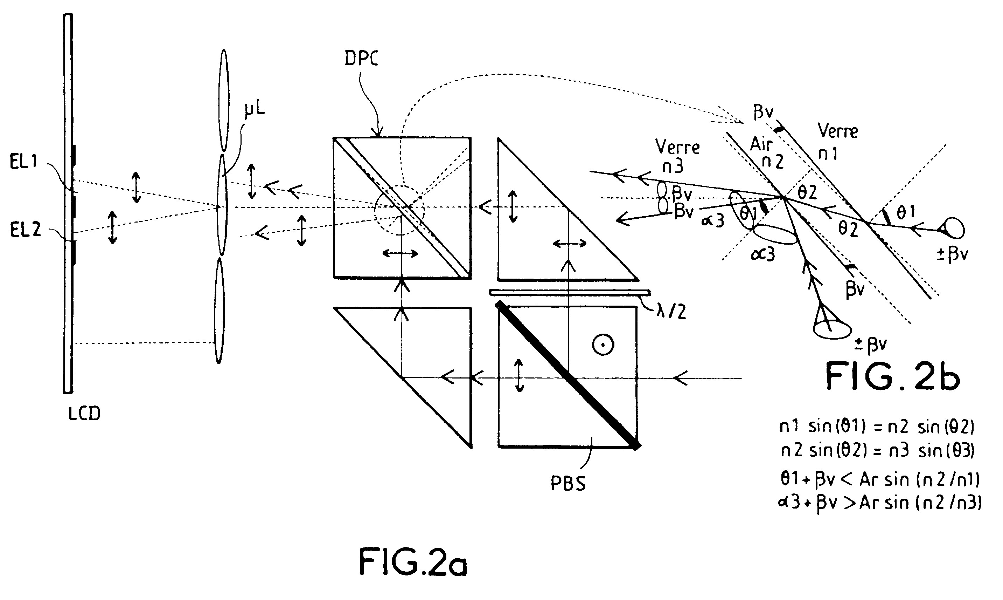

En se reportant aux figures 1a, 1b, 2a, 2b, on va donc décrire un exemple de réalisation du système de l'invention.

La lumière émise par la lampe à arc LA à l'intérieur d'un réflecteur parabolique par exemple est incidente sur le séparateur de polarisations PBS ("Polarizing Beam Splitters", c'est-à-dire séparateur de faisceaux de polarisation) possédant des filtres cholestériques, ou d'autres composants sensibles à la polarisation. On scinde la lumière en deux parties de polarisations complémentaires (faisceaux F1 et F2). On fait tourner l'une des polarisations selon $\lambda/2$ à l'aide par exemple d'une cellule TN à cristaux liquides. On recombine deux faisceaux par les miroirs M1 et M2 ou par des prismes à réflexion totale vers un double prisme DPC. Ce dernier combine les deux faisceaux F1 et F2 et offre un éclairage étendu avec deux fois le flux lumineux (sauf les pertes Fresnel).

Le coeur de ce système est le double prisme DPC. Comme représenté en figure 1b, son fonctionnement est le suivant : une réflexion interne totale a lieu à l'intérieur du verre au droit du dioptre verre/air par exemple lorsque la lumière incidente devient supérieure à l'angle critique θc (égal à Arsin (1/n), n étant l'indice de réfraction du verre). Chaque faisceau ayant un angle d'indice supérieur à θc sur cette surface est totalement réfléchi. Toutefois, les faisceaux à angle d'indice faible sont transmis (à l'exception des pertes Fresnel) dans l'air ou de l'air au verre en raison de la symétrie de la propagation. On voit donc que selon les directions des faisceaux F1, F2 fournies par les miroirs M1, M2, le faisceau F2 est transmis par le double prisme DPC et le faisceau F1 est réfléchi.

La lumière est incidente sur l'affichage à cristaux liquides LCD par l'intermédiaire d'une matrice de microlentilles µL. Ces microlentilles peuvent être sphériques ou cylindriques. Une microlentille couvre au moins deux pixels. Il est alors prévu de diriger un faisceau vers un pixel, et le second vers l'autre pixel. Par exemple, le faisceau F1 transmis par la microlentille µL1 éclaire le pixel EL1 et le faisceau F2 éclaire le pixel EL2. Suivant cette méthode, la totalité de la lumière traverse l'afficheur à cristaux liquides, d'où des résultats optimaux.

Nous obtenons réellement une onde 2 Ω pour une surface de sensiblement 1S, ce qui signifie que nous atteignons une valeur minimale de l'étendue.

Les figures 2a, 2b représentent un système selon l'invention dans lequel on a remplacé les miroirs orientables par des prismes. Dans ce cas, l'inclinaison des deux dioptres verre/air dans le plan de recombinaison ne pose aucun problème.

Nous savons que le faisceau lumineux provenant de la source lumineuse n'est pas collimaté, mais qu'il présente une ouverture d'éclairage de ± βair. Ainsi, pour la combinaison, il convient de respecter les conditions relatives à l'angle critique β et à l'angle incliné (voir figures 1 et 2).

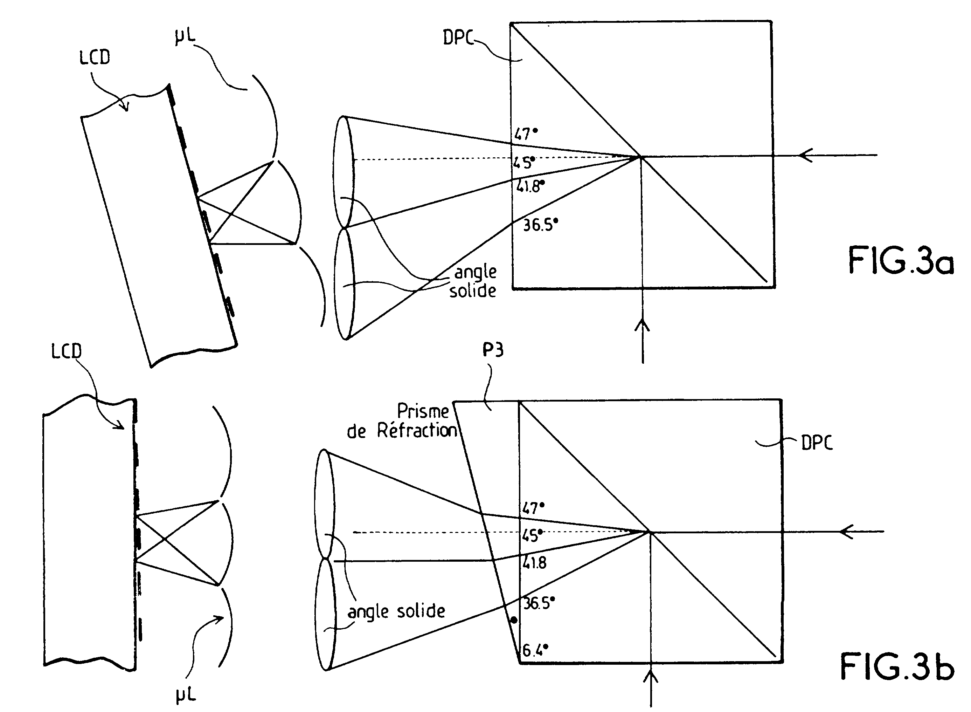

Les figures 3a et 3b représentent un exemple ou le verre présente un indice 1.5168 (BK7). La lumière émise par le double prisme n'est pas centrée sur la normale à la face de sortie du double prisme. Dans ce cas, il est possible d'éclairer directement l'écran à cristaux liquides (figures 3a) en inclinant celui-ci ou en prévoyant un prisme de sortie P3 (figure 3b) de manière à réfracter le faisceau lumineux puis à centrer la lumière d'éclairement de l'écran à cristaux liquides.

Pour centrer l'éclairage émis, il est nécessaire de prévoir un indice de réfraction assez faible (n = 1.4) pour le double prisme. Toutefois, cet indice n'est pas indispensable et induit des coûts élevés.

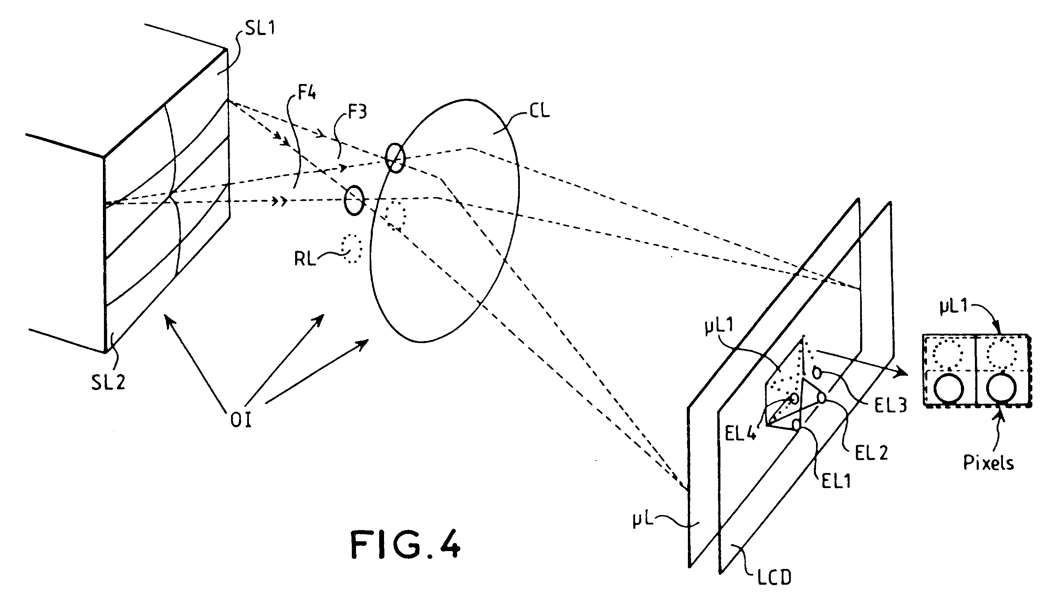

En se reportant à la figure 4, on va maintenant décrire un exemple de réalisation de l'invention dans lequel chaque microlentille permet d'éclairer quatre pixels.

Le système possède deux lentilles SL1, SL2 recevant les deux faisceaux séparés angulairement et fournis par le système de séparation de faisceaux décrit précédemment. Par exemple, ces deux faisceaux sont fournis par le double prisme DPC des figures 1a et 2a.

La lentille SL1 fournit deux faisceaux F3 et F4.

La lentille SL2 fournit deux faisceaux F5 et F6 non représentés et similaires aux figures F3 et F4. Ces différents faisceaux sont intégrés par quatre lentilles relais RL et une lentille de collection CL de façon à ce que chaque faisceau se superpose sur la surface de la matrice de microlentille µL. Ces différents faisceaux sont incidents sur la surface de µL selon des angles d'incidence différents. Chaque microlentille µL1 focalise un faisceau dans un pixel EL1 à EL4. Ainsi chaque microlentille µL1 permet d'éclairer quatre pixels de l'écran LCD.

Selon l'invention, la source lumineuse peut être étendue selon la plus grande dimension de l'écran à cristal liquide, par exemple selon dimension 16 pour un écran 16x9. Les microlentilles peuvent être cylindriques (focalisation le long de l'axe 16) ou sphériques. Dans ce dernier cas, le gain du flux lumineux est supérieur. Les microlentilles peuvent être réalisées suivant l'art antérieur.

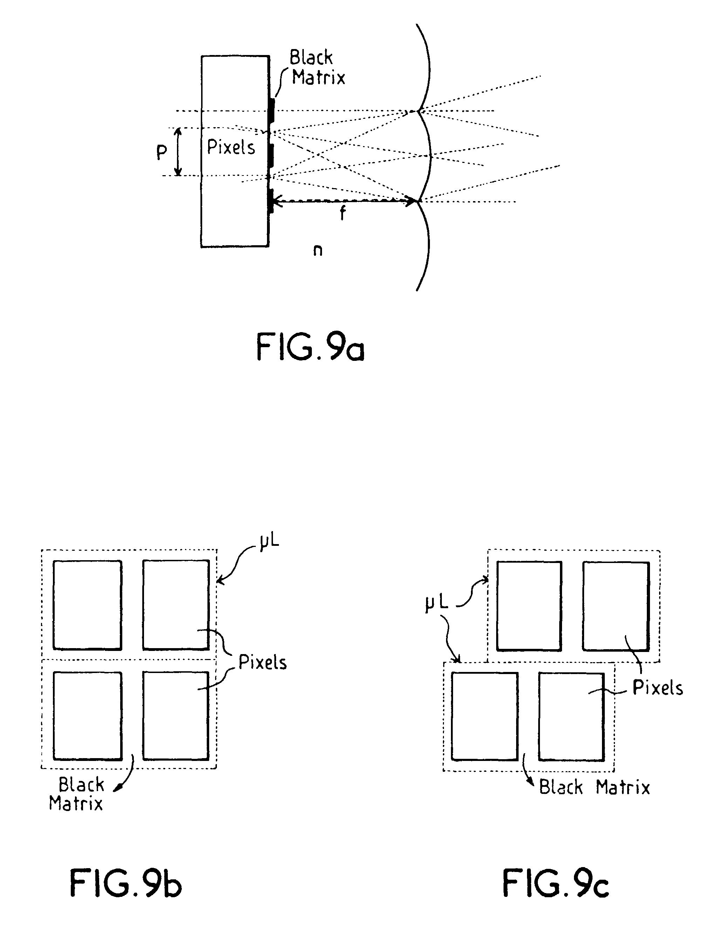

Il n'existe aucune restriction quant à l'agencement des pixels (figures 9a à 9c). Par exemple, selon la figure 9b, les pixels peuvent être arrangés en lignes et colonnes. Quatre pixels peuvent être éclairés par une seule lentille µL, selon le système d'éclairement de la figure 4, ou bien chaque groupe de deux pixels peut être éclairé par une lentille. Selon la figure 9c, les lignes de pixels sont décalées les unes par rapport aux autres. Chaque groupe de deux pixels est éclairé par une lentille µL.

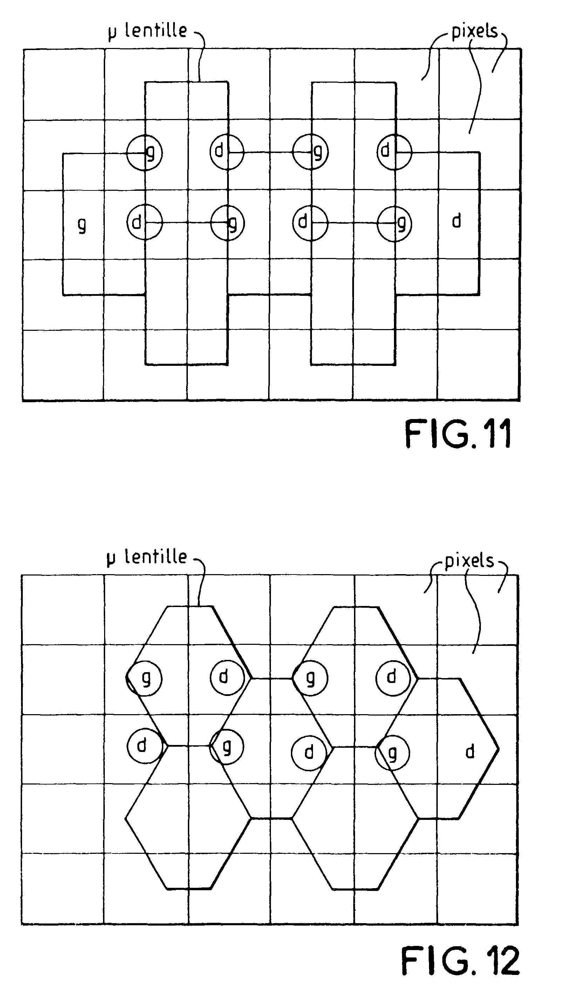

Selon les exemples de réalisation des figures 11 et 12, il est également possible de concevoir des arrangements de lentilles par rapport aux pixels de façon à ce que chaque lentille éclaire plusieurs pixels. On peut également, comme cela est représenté en figure 12, prévoir la forme des lentilles (hexagonale par exemple) pour qu'elle s'adapte à la forme circulaire de l'objectif de projection.

Nous allons maintenant donner des exemples de séparateurs de polarisations ou filtres cholestériques utilisé comme convertisseur de polarisations.

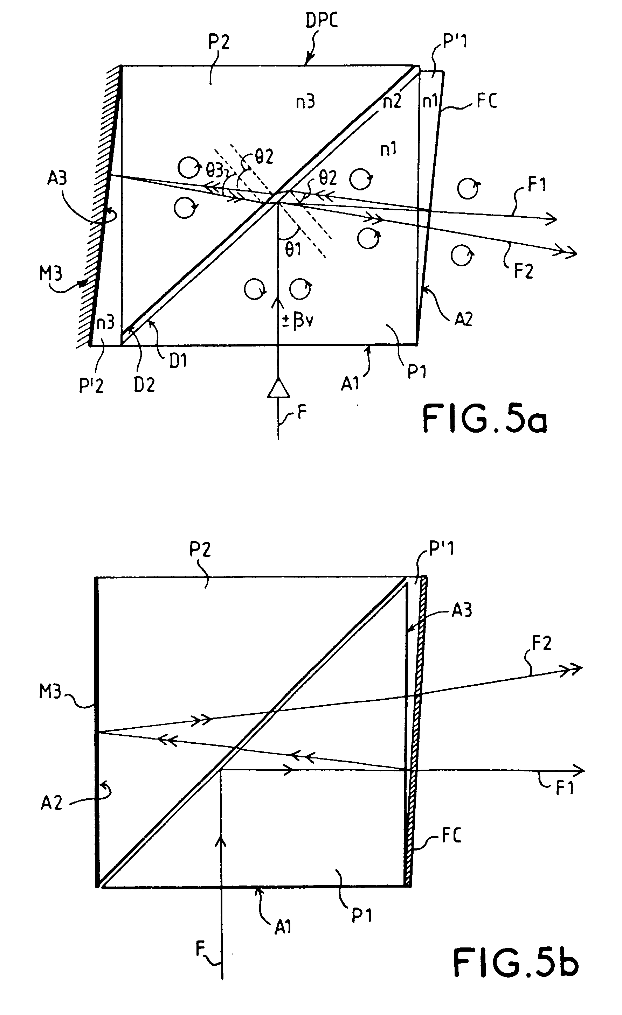

Les figures 5a et 5b représentent des systèmes selon l'invention dans lesquels le double prisme DPC remplit les fonctions de séparation de polarisations, de rotation de polarisation, et de recombinaison des faisceaux en direction de l'écran à cristal liquide.

Ce système est basé sur le principe de réflexion interne totale en vue de la combinaison des deux faisceaux. Le faisceau F non polarisé est totalement réfléchi par le premier dioptre D1 verre/air. 50 % de l'intensité du faisceau est transmise pour la polarisation circulaire droite (par exemple), et 50 % est réfléchie par le filtre cholestérique FC, puis devient incidente au droit du dioptre verre/air D1, avec un angle incident θ2 de sorte que θ2 soit inférieur à cet angle critique. Le faisceau est ensuite transmis jusqu'à sa réflexion sur le miroir M3 (surface métallisée). A la réflexion, le sens de polarisation s'inverse de droite à gauche. Puis ce faisceau traverse le dioptre verre/air D2 dans les mêmes conditions que celles préalablement évoquées, ainsi que le filtre cholestérique FC car la polarisation est maintenant convenablement orientée. Les faisceaux lumineux résultants F1 et F2 forment un angle β approprié à l'éclairage de l'écran à cristal liquide.

On peut également ne prévoir qu'un seul prisme supplémentaire P'1 par exemple, comme cela est représenté sur la figure 5b. L'important est alors que le plan du filtre cholestérique FC ne soit pas parallèle au plan du miroir M3.

La figure 5c représente un autre système de conversion par polarisation basé sur des filtres cholestériques. Il est intéressant de remplacer le miroir M3 par un rétroréflecteur MR et une lame λ/4 pour orienter le plan de polarisation de la lumière incidente. Le rétroréflecteur (à 90 degrés) est pratique car la lumière incidente réfléchie sur le rétroréflecteur est parallèle.

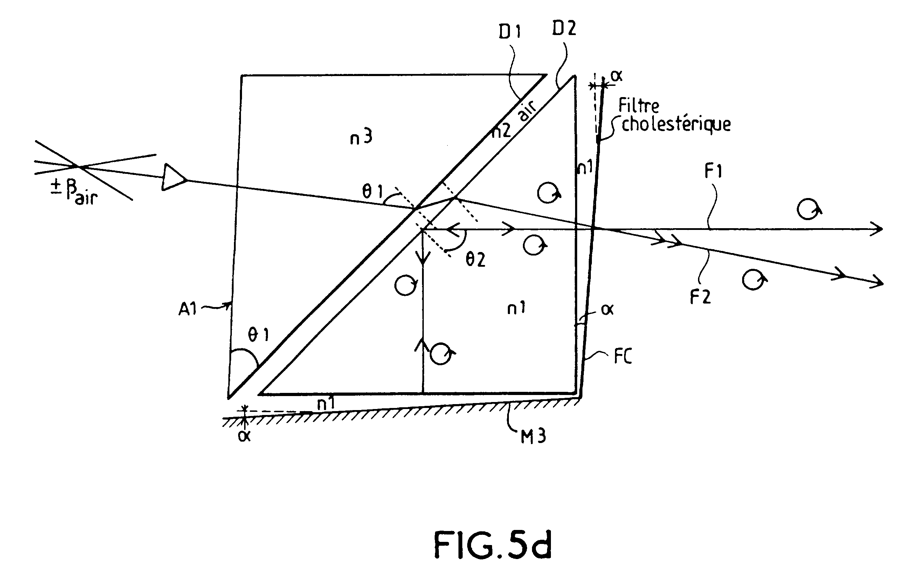

La figure 5d représente un autre système de conversion par polarisation basé sur l'utilisation de filtres cholestériques. Par rapport aux figures précédentes, la lumière non polarisée est totalement transmise au travers de deux interfaces D1, D2 verre/air. Le faisceau est ensuite scindé en deux parties : 50 % de la lumière polarisée circulaire est transmise, l'autre partie est réfléchie. L'angle d'incidence sur le filtre cholestérique FC est tel que la lumière réfléchie est totalement réfléchie en interne, au droit de l'interface verre/air. Ce faisceau est à nouveau réfléchi sur le miroir M3 (à une incidence pratiquement nulle) et voit sa polarisation inversée, puis est réfléchi par le dioptre D2 vers le filtre FC. Le dispositif DPC fournit ainsi deux faisceaux de même polarisation. L'angle entre les faisceaux F1 et F2 est donné par le fait que le filtre FC n'est pas perpendiculaire au miroir M3.

Pour obtenir un angle entre les faisceaux F1, F2 on prévoit sur La figure 5d, d'incliner le filtre cholestérique FC par rapport à l'axe optique du système (par rapport au faisceau F). Ainsi, le faisceau réfléchi par le filtre FC est incliné par rapport au faisceau F et donc par rapport à F1. Cette inclinaison peut être prévue en prévoyant un prisme auxiliaire P'1.

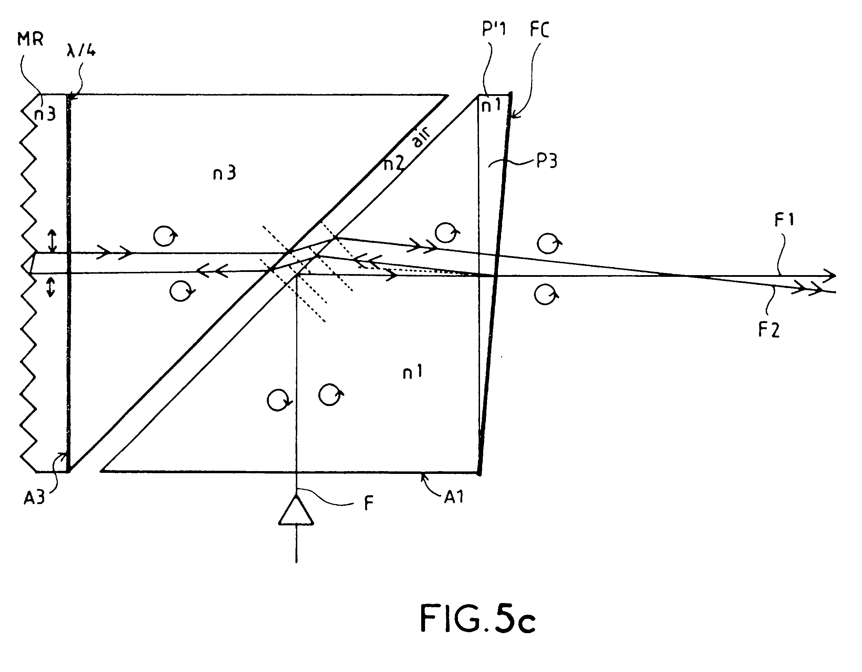

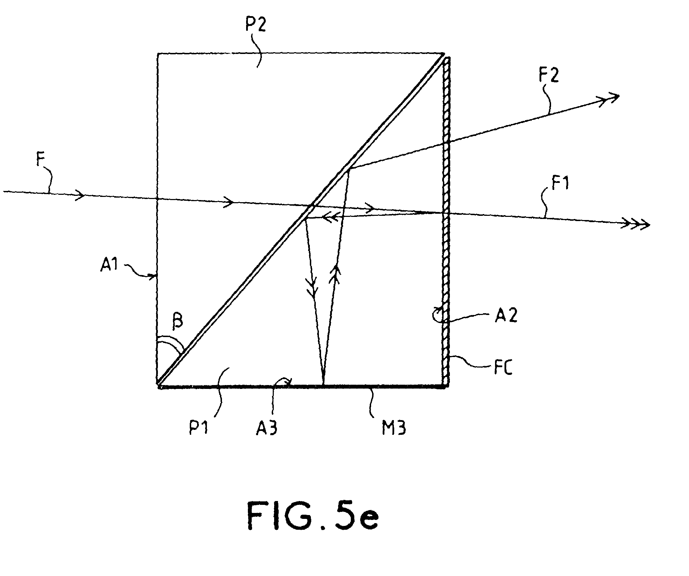

La figure 5e représente une variante de réalisation du système de La figure 5e dans lequel les deux prismes P1 et P2 ne sont pas isocèles à 45°. Selon cette figure, la face d'entrée A1 du prisme P2 fait avec l'hypoténuse des prismes, un angle β inférieur à 45°. L'une des polarisations est transmise selon le faisceau F1 par le filtre FC. L'autre polarisation est réfléchie par le filtre FC, le dioptre de séparation des deux prismes et le miroir M3 pour donner le faisceau F2. Le faisceau F2 fait alors un angle avec le faisceau F1. Pour des questions d'angles critiques de réflexion aux interfaces entre prisme, on peut prévoir d'incliner la direction du faisceau F par rapport à la face A1.

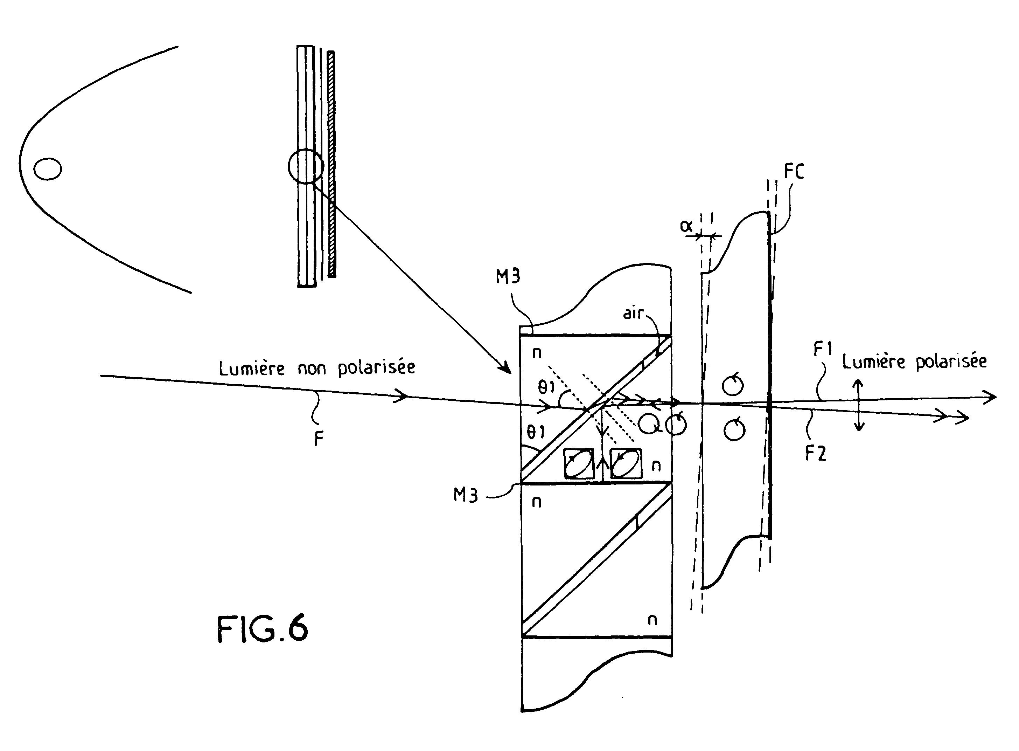

Ce système peut être appliqué au système de projection par l'intermédiaire de deux "gros" prismes. Toutefois, il est possible de concevoir un convertisseur par polarisation assez mince en constituant un ensemble de plusieurs petits systèmes de conversion par polarisation comme représenté sur la figure 6. De cette manière, nous obtenons le convertisseur par polarisation présentant une épaisseur plus faible. Le principe de fonctionnement est identique à celui déjà évoqué ci-dessus notamment en relation avec la figure 5d (dans ce cas le filtre FC est incliné d'un angle a par rapport aux faces de sortie des prismes) ou en relation avec la figure 5e. La lumière circulaire polarisée (à droite par exemple) est réfléchie :

La réflexion interne totale introduit un décalage de phases à entre les composantes s et p.

La réflexion sur le miroir M3 introduit un décalage de phases π.

La réflexion interne totale introduit à nouveau un décalage de phase -δ entre les composantes s & p.

Ainsi, le décalage de phase totale est π. La lumière circulaire polarisée à droite devient une lumière circulaire polarisée à gauche.

Ce système miniaturisé présente plusieurs avantages.

- Si l'on adapte le convertisseur par polarisation miniaturisé à l'affichage à cristaux liquides (avec polariseur et analyseur), nous évitons toutes pertes et améliorons le rendement lumineux d'un facteur de -2.
- Le système de prismes peut être mince et facile à fabriquer. Il peut être composé d'un matériau transparent moulé (verre ou acrylique)

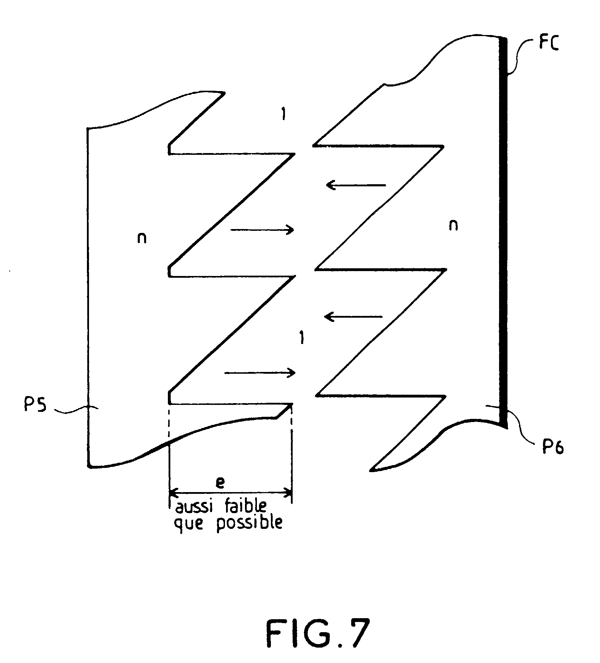

Pour cela, on dispose de deux plaques P5, P6 (en verre) dentelées de formes complémentaires de façon à reconstituer les prismes de la figure 7. Chaque dent possède par exemple une première face perpendiculaire au plan des plaques et une deuxième face inclinée sensiblement à 45°. La première face est métallisée pour constituer le miroir M3.

La plaque P6 peut posséder sur sa face plane le filtre cholestérique FC.

Les deux plaques P5, P6 sont ensuite emboîtées l'une dans l'autre.

Le système de prismes peut être agencé le long de deux directions possibles : l'une le long du côté long de l'affichage LCD, et l'autre le long du côté court. Dans le cas des affichages LCD de type AM courants, où le contraste est supérieur pour l'angle d'éclairage le long du côté le plus long de l'affichage LCD, il est clair que le système doit être installé selon la direction du côté court de l'écran à cristal liquide.

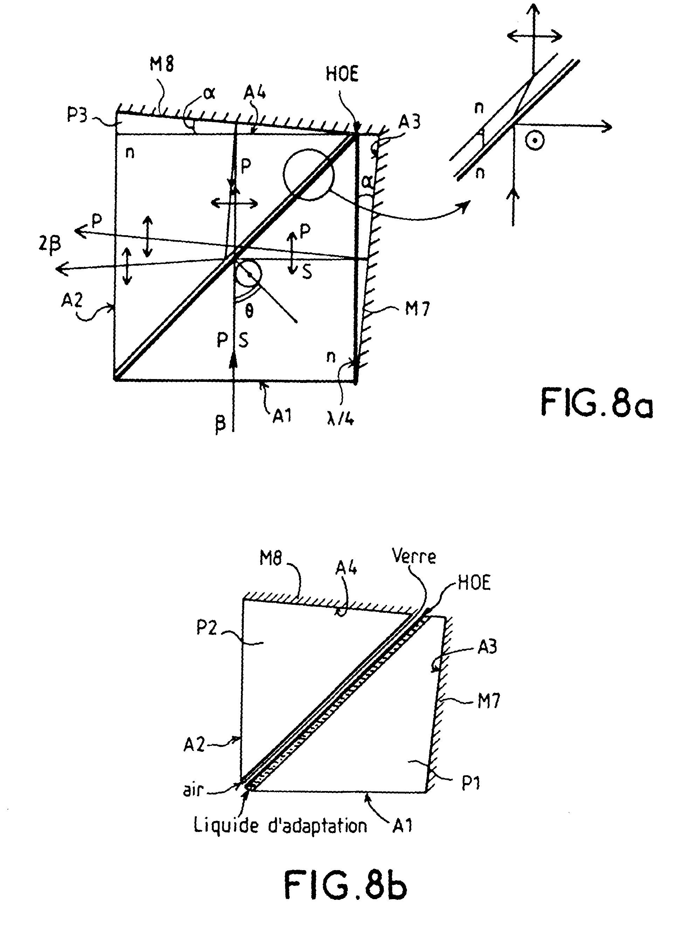

La figure 8a représente une variante selon laquelle le filtre cholestérique est placé entre les deux faces communes des deux prismes. Dans cette variante, le filtre cholestérique peut être remplacé par une variante utilisant un élément holographique HOE. L'élément optique holographique constitué d'un élément diffractant à volume de phase peut assurer une fonction optique efficace lorsqu'il est réalisé dans un film assez min-

ce (d'environ 10 μm). Ces composants sont moins onéreux, légers et peuvent être combinés à une autre fonction optique.

La fonction de séparation de polarisations est obtenue en enregistrant les figures d'interférences de deux ondes planes cohérentes dans un matériau photosensible à film mince. La variation de l'indice induit (dn) à l'intérieur du matériau est importante. Les variations de l'indice d'enregistrement permettent de réaliser une fonction miroir pour une composante de polarisation (conditions de Brewster à 45 degrés), la seconde composante de polarisation étant totalement transmise.

La figure 8e représente un mode de réalisation du dispositif de la figure 8a. Le séparateur holographique HOE est réalisé sur une plaque de verre et est collé sur la face hypoténuse du prisme P1 à l'aide d'un produit adaptateur d'indice. Les prismes P1 et P2 sont réalisés chacun en une seule pièce avec leurs faces M7, M8 métallisés.

Ce type de composant est couramment employé pour différentes couleurs (c'est-à-dire une largeur de bande limitée).

Ce système de conversion de l'invention de polarisations est donc basé sur un polariseur optique holographique très compact. Ce dernier pourra être utilisé dans un système de projection pour la lumière blanche ou pour chaque couleur.

La lumière non polarisée (blanche ou monochrome) est incidente sur le polariseur HOE. La lumière polarisée selon une direction "S" est totalement réfléchie. La lumière polarisée perpendiculairement "p" n'est pas diffractée et traverse le polariseur HOE (adapté à l'hypoténuse du prisme). En raison de l'angle incident, θ est inférieur à l'angle critique [θc = arsin (1/n). La composante "p" est ensuite transmise deux fois sur la limite HOE/air et air/verre. Cette composante "p" est réfléchie par le miroir incliné, M8 puis par le phénomène de réflexion interne totale (TIR). La composante "s" réfléchie par le polariseur HOE traverse deux fois une lame de λ/4 et est réfléchie sur le miroir incliné M7. Ensuite, le faisceau polarisé de type "s" devient un faisceau polarisé de type "p". Ce faisceau devient à nouveau incident sur le polariseur HOE, puis est transmis totalement : tout d'abord par le HOE, puis par les limites HOE/air et air/verre.

De cette manière, la lumière est totalement polarisée. Cette méthode présente plusieurs avantages, à savoir :

- les deux chemins optiques sont égaux, donc aucun problème d'uniformité lors de l'éclairage de l'affichage LCD ;
- grâce au diviseur de faisceau de polarisation holographique actuellement utilisé pour chaque couleur, il est possible de concevoir un convertisseur de polarisations pour chaque canal d'un système à trois LCD, sans trop augmenter la compacité du système de projection ;

- la polarisation p traversant les dioptres verre-air et air-verre n'est pratiquement pas atténuée. Ceci limite les pertes de Fresnel du système au minimum.

L'écran à cristaux liquides reçoit donc deux faisceaux principaux F1, F2 polarisés de la même façon, chacun étant focalisé par les microlentilles sur la moitié des pixels (sur chaque ligne par exemple). A l'intérieur de chaque pixel, la focalisation dépend uniquement de l'ouverture d'éclairage de la lampe. Elle ne présente donc aucune différence si l'on fait abstraction du système de polarisation.

Toutefois, les conditions de focalisation optimale sont les suivantes :

Pour chaque pixel, la focalisation est légèrement décalée par rapport à l'axe.

Pour disposer d'un système optimisé, il est donc nécessaire de respecter les conditions ci-après :

$$\text{Arctg } (p/f) \geq \beta \text{ verre}$$

p est le pas horizontal de l'affichage à cristaux liquides (voir figure 6a).

f est la longueur focale de chaque microlentille dans l'épaisseur du verre ou de l'affichage à cristaux liquides.

Si cette condition n'est pas remplie (par exemple, si le pas est trop petit ou trop grand), il est possible de modifier l'épaisseur de l'affichage.

Si l'ouverture d'éclairage β est trop importante, le recombineur pourra servir de filtre angulaire. En effet, si le convertisseur par polarisation est conçu de manière à obtenir ± β deg dans l'air par exemple et que la valeur d'étendue de la lampe varie (au cours de sa durée de vie ou suite à son changement), tous les faisceaux d'angle supérieurs à β, seront transmis pour un bras uniquement (pas de réflexion totale interne), puis réfléchis pour le second bras et non pas transmis dans leur totalité. De cette manière, le boîtier d'éclairage est un filtre angulaire. Nous pouvons ainsi utiliser une source lumineuse plus étendue sans affecter le contraste de l'affichage à cristaux liquides.

Le rendement d'un tel convertisseur de polarisation par rapport à un système conventionnel est le suivant :

$$\text{Gain} = [R + T]/T \text{ polariseur}$$

\*   Pour un séparateur de polarisations (PBS classique à multicouches) présentant des coefficients de réflexion R = 0,99 et de transmission T = 0,95, on a (figure 5a)

$$R = 0.5 \times 0.99 \times 1 \times 0.86 \times 0.98 = 0.416$$
$$T = 0.5 \times 0.95 \times 1 \times 0.94 \times 1 \times 0.98 = 0.437$$

Gain = [0.416+0.437]/0.41 = ~ 2.1 sans polariseur

Gain = [0.416+0.437]x[0.82/0.41] = ~ 1.7 avec polariseur

* Pour un filtre cholestérique ayant R = 0.96 et T = 0.96 on a :

R = [0.86/2]x0.96x0.98x0.98x0.9 = 0.356
T = [0.86/2]x0.96x0.98x0.98 = 0.404
Gain = [0.356+0.440]x[(0.82x0.93)10.41] = ~ 1.32 avec polariseur

Les deux calculs ont été réalisés sur la base des paramètres suivants :

- Revêtement antireflet de 0.98 pour les prismes et pour le double prisme ;
- Réflexion totale R = 1;
- Transmission du double prisme 0.86 ;
- Transmission du polariseur : 0,41 ;
- Transmission de l'analyseur : 0,82 ;
- Réflexion du miroir M3 = 0,9 ;
- Polarisabilité du filtre cholestérique = 0.93 ;
- La transmission de la lame de rotation de polarisation $\lambda$ est prise égale à 94 %.

Le système de l'invention présente plusieurs avantages, à savoir :

* le système est optimal pour le convertisseur par polarisation et la focalisation
* la focalisation le long de l'axe horizontal ne modifie pas les valeurs de contraste car l'angle admissible horizontalement de l'affichage à cristaux liquides est assez important
* la polarisation p traversant les dioptres verre-air et air-verre est peu atténuée car elle est "p". Ceci limite les pertes de Fresnel du système au minium.

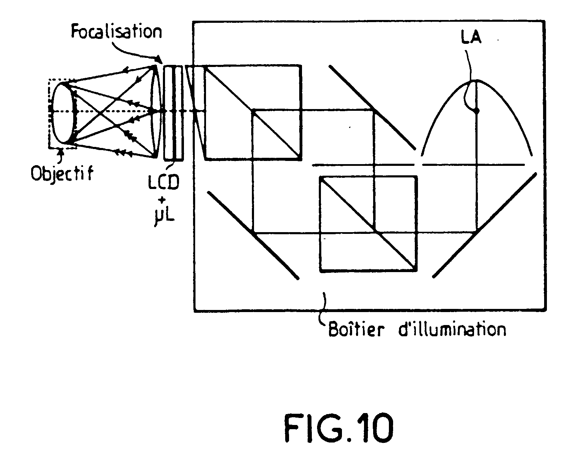

Au niveau de la sortie de ce système, nous pouvons directement utiliser ce faisceau pour éclairer l'affichage à cristaux liquides d'un projecteur monovalve ou monochrome (voir figure 10) ou pour un système à trois valves pour la projection trichrome. On trouve dans ce système, un boîtier d'illumination qui fournit deux faisceaux ainsi que décrit précédemment, l'écran LCD et le réseau de microlentilles $\mu$L.

## Revendications

1. Système d'éclairement d'un écran à cristal liquide comprenant une seule source lumineuse émettant un faisceau de lumière non polarisée (F), un système de séparation et de modification (PBS, M1, M2, DPC) des polarisations recevant ce faisceau de lumière non polarisée et le modifiant de manière à retransmettre vers l'écran à cristal liquide un premier et un deuxième faisceaux (F1, F2), polarisés selon une même direction de polarisation, les axes des deux faisceaux faisant un angle déterminé ($2\beta$) ; caractérisé en ce qu'il comporte une matrice de microlentilles à raison d'une microlentille ($\mu$l) pour au moins deux éléments images (EL1, EL2) voisins de l'écran à cristal liquide, chaque microlentille dirige la partie du premier faisceau qu'elle reçoit sur au moins un des éléments images (EL1) et la partie du deuxième faisceau qu'elle reçoit sur le ou les autres éléments image (EL2).

2. Système selon la revendication 1, caractérisé en ce que l'écran (LCD) est dans le plan focal des microlentilles ($\mu$L).

3. Système selon la revendication 1, caractérisé en ce que les microlentilles ($\mu$L) sont sphériques.

4. Système selon la revendication 1, caractérisé en ce que les microlentilles ($\mu$L) sont cylindriques et permettent d'éclairer chacune deux rangées d'éléments images.

5. Système selon la revendication 1, caractérisé en ce que le système de séparation de polarisation comporte un séparateur de polarisation (PBS) séparant spatialement la lumière de la source en deux faisceaux (F1, F2) polarisés différemment, au moins un réflecteur associé (M1, M2) à un trajet d'un faisceau (F1, F2), un recombineur de faisceau (DPC) recevant les deux faisceaux et les transmettant à l'écran (LCD).

6. Système selon la revendication 5, caractérisé en ce qu'il comporte deux réflecteurs (M1, M2) associés chacun au trajet d'un faisceau (F1, F2).

7. Système selon l'une des revendications 5 ou 6, caractérisé en ce que les réflecteurs (M1, M2) sont orientables.

8. Système selon la revendication 5, caractérisé en ce qu'il comporte un dispositif de rotation de polarisation ($\lambda$/2) disposé sur le trajet de l'un des faisceaux (F1, F2).

9. Système selon la revendication 1, caractérisé en ce qu'il comporte :

- un dispositif pour séparer le premier faisceau en un troisième et quatrième faisceaux et le deuxième faisceau en un cinquième et un sixième faisceau ;
- un dispositif intégrateur (OI) pour superposer les quatre faisceaux obtenus sur la matrice de microlentilles ($\mu$L), chaque microlentille ($\mu$L1)

permettant de transmettre les quatre faisceaux séparément sur quatre pixels (EL1, EL2, EL3, EL4).

10. Système selon la revendication 1, caractérisé en ce que le séparateur de polarisation comporte un double prisme possédant une face d'entrée (A1 ) recevant le faisceau de lumière non polarisée (F), une face de réflexion (A3), une face de sortie (A2) recevant le faisceau de lumière non polarisée (F) transmise par le double prisme, un filtre de polarisations (FC) étant associée à la face sortie (A2) transmettant la lumière d'un type de polarisation (F1) et réfléchissant la lumière d'un autre type de polarisation vers la face de réflexion (A3) qui réfléchit la lumière vers la face de sortie (A2) après rotation de polarisation.

11. Système selon la revendication 10, caractérisé en ce que le filtre de polarisation (FC) fait un angle différent de 90° avec la direction du faisceau de lumière non polarisée.

12. Système selon la revendication 10, caractérisé en ce que le double prisme possède une face de réflexion interne inclinée sensiblement de 45° par rapport aux faces d'entrée et de sortie, le faisceau de lumière non polarisée (F) ayant un angle d'incidence (θ) sur cette face différent de 45°.

13. Système selon la revendication 10, caractérisé en ce que la face de réflexion comporte un miroir rétroréfléchissant (MR).

14. Système selon la revendication 10, caractérisé en ce que la face de réflexion comporte un dispositif de rotation de polarisation de λ/4.

15. Système selon la revendication 10, caractérisé en ce que la face d'entrée et la face de sortie sont deux faces opposées du double-prisme et en ce que l'un des prismes porte sur deux de ces faces adjacentes, l'une le filtre de polarisation (FC), l'autre une surface réfléchissante (M3).

16. Système selon la revendication 15, caractérisé en ce qu'il comporte une série de double-prisme juxtaposés, les faces d'entrée des différents double-prismes étant dans un même premier plan et les faces de sortie des différents double-prismes étant dans un même deuxième plan.

17. Système selon la revendication 16, caractérisé en ce qu'il comporte deux plaques transparentes dentelées (P5, P6), emboîtées l'une dans l'autre par leurs dentures, chaque dent possédant une face perpendiculaire au plan de la plaque et une face inclinée, les faces perpendiculaires de l'une des plaques au moins étant réfléchissantes.

18. Système selon la revendication 17, caractérisé en ce qu'une face plane d'une plaque (P6) opposée à la face dentelée est munie d'un filtre de polarisation.

19. Système selon la revendication 1, caractérisé en ce que le séparateur de polarisations (PBS) comporte un double prisme possédant une première face d'entrée recevant le faisceau de lumière non polarisée (F), une deuxième face opposée à cette face d'entrée et possédant des moyens de réflexion (M8), une troisième face adjacente à la première et à la deuxième face et possédant des moyens de réflexion (M7) et en ce qu'entre les deux demi-prismes est prévu une couche de matériau photosensible dans laquelle est enregistré un hologramme permettant de réfléchir la lumière polarisée selon une première direction et de transmettre la lumière selon une deuxième direction perpendiculaire à la première direction.

**Patentansprüche**

1. System zur Beleuchtung eines Flüssigkristallschirms mit einer ein nicht-polarisiertes Lichtbündel (F) aussendenden einzigen Lichtquelle, einem System (PBS, M1, M2, DPC) zur Trennung und zur Änderung der Polarisation, das das nicht-polarisierte Lichtbündel empfängt und derart ändert, daß ein erstes und ein zweites Bündel (F1, F2) zu dem Flüssigkristallschirm übertragen werden, die in derselben Polarisationsrichtung polarisiert sind, wobei die Achsen der beiden Lichtbündel einen vorbestimmten Winkel (2β) bilden,
   dadurch gekennzeichnet, daß
   das System eine Matrix von Mikrolinsen mit einer Mikrolinse (μL) für wenigstens zwei benachbarte Bildelemente (EL1, EL2) des Flüssigkristallschirms aufweist, daß jede Mikrolinse den Teil des ersten Lichtbündels, den sie empfängt, auf wenigstens eines der Bildelemente (EL1) richtet, und den Teil des zweiten Lichtbündels, den sie empfängt, auf die anderen Bildelemente (EL2) richtet.

2. System nach Anspruch 1, dadurch gekennzeichnet, daß der Schirm (LCD) in der Brennpunktebene der Mikrolinsen (μL) liegt.

3. System nach Anspruch 1, dadurch gekennzeichnet, daß die Mikrolinsen (μL) kugelförmig sind.

4. System nach Anspruch 1, dadurch gekennzeichnet, daß die Mikrolinsen (μL) zylinderförmig sind und jede die Beleuchtung jeder von zwei Reihen von Bildelementen ermöglicht.

**5.** System nach Anspruch 1, dadurch gekennzeichnet, daß das System zur Trennung und zur Änderung der Polarisation einen Polarisationstrenner (PBS) enthält, der das Licht der Quelle räumlich in zwei unterschiedlich polarisierte Lichtbündel (F1, F2) trennt, daß wenigstens ein Reflektor (M1, M2) für einen Lichtbündelverlauf (F1, F2) und eine Lichtbündel-Kombiniereinheit (DPC) vorgesehen sind, die die beiden Lichtbündel empfängt und sie zu dem Schirm (LCD) überträgt.

**6.** System nach Anspruch 5, dadurch gekennzeichnet, daß es zwei Reflektoren (M1, M2) enthält, die jeweils einem Lichtbündelverlauf (F1, F2) zugeordnet sind.

**7.** System nach einem der Ansprüche 5 oder 6, dadurch gekennzeichnet, daß die Reflektoren (M1, M2) einstellbar sind.

**8.** System nach Anspruch 5, dadurch gekennzeichnet, daß das System eine Vorrichtung zur Drehung der Polarisation ($\lambda/2$) in dem Verlauf eines der Lichtbündel (F1, F2) aufweist.

**9.** System nach Anspruch 1, dadurch gekennzeichnet, daß es folgendes enthält:

- eine Vorrichtung zum Trennen des ersten Lichtbündels in ein drittes und ein viertes Lichtbündel und des zweiten Lichtbündels in ein fünftes und ein sechstes Lichtbündel,
- eine Integriervorrichtung (QI) zur Überlagerung der vier erhaltenen Lichtbündel auf der Matrix der Mikrolinsen ($\mu$L), wobei jede Mikrolinse ($\mu$L1) die vier Lichtbündel getrennt auf vier Pixel (EL1, EL2, EL3, EL4) übertragen kann.

**10.** System nach Anspruch 1, dadurch gekennzeichnet, daß der Polarisationstrenner ein Doppelprisma mit einer Eingangsfläche (A1), die das nicht-polarisierte Lichtbündel (F) empfängt, mit einer Reflexionsfläche (A3), einer Ausgangsfläche (A2) enthält, die das von dem Doppelprisma übertragene, nicht-polarisierte Lichtbündel empfängt, wobei ein Polarisationsfilter (FC) der Ausgangsfläche (A2) zugeordnet ist, das das Licht eines Polarisationstyps (F1) überträgt und das Licht eines anderen Polarisationstyps zu der Reflexionsfläche (A3) reflektiert, die nach der Drehung der Polarisation das Licht zu der Ausgangsfläche (A2) reflektiert.

**11.** System nach Anspruch 10, daß das Polarisationsfilter (FC) mit der Richtung des nicht-polarisierten Lichtbündels einen von 90° abweichenden Winkel bildet.

**12.** System nach Anspruch 10, dadurch gekennzeichnet, daß das Doppelprisma eine innere Reflexionsfläche aufweist, die um etwa 45° zu der Eingangsfläche und der Ausgangsfläche geneigt ist, und daß das nicht-polarisierte Lichtbündel einen Einfallswinkel ($\theta$) auf diese Fläche aufweist, der von 45° abweicht.

**13.** System nach Anspruch 10, dadurch gekennzeichnet, daß die Reflexionsfläche einen reflektierenden Spiegel (MR) aufweist.

**14.** System nach Anspruch 10, dadurch gekennzeichnet, daß die Reflexionsfläche eine Vorrichtung zur Drehung der Polarisation um $\lambda/4$ aufweist.

**15.** System nach Anspruch 10, dadurch gekennzeichnet, daß die Eingangsfläche und die Ausgangsfläche zwei gegenüberliegende Flächen des Doppelprismas sind und daß eines der Prismen auf zwei seiner aneinanderliegenden Flächen einerseits das Polarisationsfilter (FC) und andererseits eine reflektierende Oberfläche (M3) aufweist.

**16.** System nach Anspruch 15, dadurch gekennzeichnet, daß es eine Reihe von nebeneinander liegenden Doppelprismen aufweist, daß die Eingangsflächen der verschiedenen Doppelprismen in derselben ersten Ebene und die Ausgangsflächen der verschiedenen Doppelprismen in derselben zweiten Ebene liegen.

**17.** System nach Anspruch 16, dadurch gekennzeichnet, daß es zwei zahnförmige transparente Platten (P5, P6) aufweist, die mit ihren Verzahnungen ineinandergreifen, daß jeder Zahn eine zu der Ebene der Platte senkrechte Fläche und eine geneigte Fläche aufweist und daß die zu wenigstens einer der Platten senkrechten Flächen reflektierend ausgebildet sind.

**18.** System nach Anspruch 17, dadurch gekennzeichnet, daß eine zu der zahnförmigen Fläche gegenüberliegende ebene Fläche einer Platte (P6) mit einem Polarisationsfilter versehen ist.

**19.** System nach Anspruch 1, dadurch gekennzeichnet, daß der Polarisationstrenner (PBS) ein Doppelprisma mit einer das nicht-polarisierte Lichtbündel empfangenen Eingangsfläche (F) aufweist, eine zweite Fläche aufweist, die dieser Eingangsfläche gegenüberliegt, und Reflexionsmittel (M8) aufweist, eine dritte Fläche, die neben der ersten und der zweiten Fläche liegt und Reflexionsmittel (M7) aufweist und daß zwischen den beiden Halbprismen eine Schicht aus einem photoempfindlichen Material vorgesehen ist, in der ein Hologramm aufgezeichnet wird, das das polarisierte Licht in eine erste Richtung reflektieren und das Licht in eine zweite, zu der ersten Richtung senkrechte Richtung projizieren kann.

## Claims

1. System for illuminating a liquid-crystal screen, comprising a single light source emitting an unpolarized light beam (F), a system (PBS, M1, M2, DPC) for splitting and modifying the polarizations receiving this unpolarized light beam and modifying it so as to retransmit, onto the liquid-crystal screen, a first and a second beam (F1, F2) which are polarized in the same polarization direction, the axes of the two beams making a defined angle ($2\beta$), characterized in that it includes a matrix of microlenses with one microlens ($\mu$L) for at least two adjacent picture elements (EL1, EL2) in the liquid-crystal screen, each microlens directing that part of the first beam which it receives onto at least one (EL1) of the two picture elements and that part of the second beam which it receives onto the other picture element or elements (EL2).

2. System according to Claim 1, characterized in that the screen (LCD) is in the focal plane of the microlenses ($\mu$L).

3. System according to Claim 1, characterized in that the microlenses ($\mu$L) are spherical.

4. System according to Claim 1, characterized in that the microlenses ($\mu$L) are cylindrical and each enables two rows of picture elements to be illuminated.

5. System according to Claim 1, characterized in that the polarizing splitter and modification system includes a polarizing splitter (PBS) which spatially splits the light from the source into two beams (F1, F2) which are polarized differently, at least one reflector (M1, M2) associated with a path of one beam (F1, F2), a beam recombiner (DPC) receiving the two beams and transmitting them to the screen (LCD).

6. System according to Claim 5, characterized in that it includes two reflectors (M1, M2) each associated with the path of a beam (F1, F2).

7. System according to either of Claims 5 and 6, characterized in that the reflectors (M1, M2) are rotatable.

8. System according to Claim 5, characterized in that it includes a polarization-rotation ($\lambda/2$) device arranged in the path of one of the beams (F1, F2).

9. System according to Claim 1, characterized in that it includes:

   - a device for splitting the first beam into a third and fourth beam, and the second beam into a fifth and sixth beam; and
   - an integrator device (OI) for superimposing the four beams obtained on the matrix of microlenses ($\mu$L), each microlens ($\mu$L1) enabling the four beams to be transmitted separately to four pixels (EL1, EL2, EL3, EL4).

10. System according to Claim 1, characterized in that the polarizing splitter includes a double prism having an entry face (A1) receiving the unpolarized light beam (F), a reflection face (A3), an exit face (A2) receiving the unpolarized light beam (F) transmitted via the double prism, a polarizing filter (CF), being associated with the exit face (A2), transmitting the light of a polarization type (F1) and reflecting the light of another polarization type onto the reflection face (A3) which reflects the light onto the exit face (A2) after polarization rotation.

11. System according to Claim 10, characterized in that the polarizing filter (CF) makes an angle other than 90° with the direction of the unpolarized light beam.

12. System according to Claim 10, characterized in that the double prism has an internal reflection face inclined substantially at 45° with respect to the entry and exit faces, the unpolarized light beam (F) having an angle of incidence ($\theta$) on this face other than 45°.

13. System according to Claim 10, characterized in that the reflection face includes a retroreflective mirror (RM).

14. System according to Claim 10, characterized in that the reflection face includes a $\lambda/4$ polarization-rotation device.

15. System according to Claim 10, characterized in that the entry face and the exit face are two opposite faces of the double prism and in that one of the prisms carries the polarizing filter (CF) on one of two of these adjacent faces and a reflective surface (M3) on the other.

16. System according to Claim 15, characterized in that it includes a series of juxtaposed double prisms, the entry faces of the various double prisms lying in the same first plane and the exit faces of the various double prisms lying in the same second plane.

17. System according to Claim 16, characterized in that it includes two dentate transparent plates (P5, P6) fitted one into the other by their teeth, each tooth having a face perpendicular to the plane of the plate and an inclined face, the perpendicular faces of one of the plates at least being reflective.

18. System according to Claim 17, characterized in that a plane face of one plate (P6) opposite the dentate face is provided with a polarizing filter.

19. System according to Claim 1, characterized in that the polarizing splitter (PBS) includes a double prism having a first entry face receiving the unpolarized light beam (F), a second face opposite this entry face and having reflection means (M8), a third face, adjacent to the first and second faces, possessing reflection means (M7) and in that, between the two half-prisms, a layer of photosensitive material is provided in which a hologram is recorded, enabling the light polarized in a first direction to be reflected and enabling the light polarized in a second direction, perpendicular to the first direction, to be transmitted.

FIG.1a

FIG.1b

$$n1\sin(\theta1) = n2\sin(\theta2)$$
$$n2\sin(\theta2) = n3\sin(\theta3)$$

$$\theta1 + \beta v < Ar\sin(n2/n1)$$
$$\alpha3 + \beta v > Ar\sin(n2/n3)$$

EP 0 740 476 B1

FIG.2b

$n1\ \sin(\theta 1) = n2\ \sin(\theta 2)$

$n2\ \sin(\theta 2) = n3\ \sin(\theta 3)$

$\theta 1 + \beta v < Ar\ \sin(n2/n1)$

$\alpha 3 + \beta v > Ar\ \sin(n2/n3)$

FIG.2a

EP 0 740 476 B1

FIG.3a

FIG.3b

EP 0 740 476 B1

EP 0 740 476 B1

FIG.4

FIG.5a

FIG.5b

FIG.5c

FIG.5d

EP 0 740 476 B1

FIG.5e

FIG.6

FIG.7

EP 0 740 476 B1

FIG.8a

FIG.8b

22

EP 0 740 476 B1

FIG.9a

FIG.9b

FIG.9c

23

Focalisation
Objectif
LCD
+
μL
LA
Boîtier d'illumination

FIG.10

μ lentille

pixels

FIG.11

μ lentille

pixels

FIG.12